**Europäisches Patentamt**

**European Patent Office**

**Office européen des brevets**

(19)

(11) Veröffentlichungsnummer : **0 560 725 A1**

(12) # EUROPÄISCHE PATENTANMELDUNG

(21) Anmeldenummer : **93810163.1**

(22) Anmeldetag : **04.03.93**

(51) Int. Cl.⁵ : **C02F 3/10,** C02F 3/06

(30) Priorität : **11.03.92 CH 785/92**

(43) Veröffentlichungstag der Anmeldung :
**15.09.93 Patentblatt 93/37**

(84) Benannte Vertragsstaaten :
**AT BE CH DE ES FR GB IT LI NL**

(71) Anmelder : **CIBA-GEIGY AG**
**Klybeckstrasse 141**
**CH-4002 Basel (CH)**

(72) Erfinder : **Thüer, Markus, Dr.**
**Schwalbenweg 2**
**CH-4312 Rheinfelden (CH)**
Erfinder : **Stucki, Gerhard, Dr.**
**Egghof**
**CH-4466 Ormalingen (CH)**
Erfinder : **Reisinger, Michael, Dr.**
**Murackerweg 308**
**CH-4208 Himmelried (CH)**

(54) **Wasserreinigungsverfahren.**

(57)   Verfahren zur Reinigung von Wasser wobei man das mit organischen Verbindungen belastetes Wasser durch einen Rutschbett-Adsorber leitet, welcher mit einem Adsorptionsmaterial (6), das vor allem im unteren Bereich von einem oder mehreren Mikroorganismen besiedelt ist, gefüllt ist.

Fig. 1

EP 0 560 725 A1

Die vorliegende Erfindung betrifft ein neues Verfahren zur Reinigung von organische, vor allem halogenierte Verbindungen enthaltendem Wasser, mittels eines Rutschbett-Adsorbers sowie eine Vorrichtung zur Durchführung des Verfahrens.

In einem Rutschbett-Adsorber durchströmt das zu behandelnde Wasser einen zylindrischen Behälter von unten nach oben. Im Zylinder selbst befindet sich ein geeignetes Adsorptionsmittel. Das einströmende Wasser belädt dadurch das Adsorptionsmittel zuerst vor allem im unteren Bereich mit den Verunreinigungen. Ist die Kapazität des Adsorptionsmittels dadurch im unteren Teil unter einen kritischen Wert gesunken, kann dieser Teil abgelassen und von oben durch frisches Adsorptionsmittel ersetzt werden. Es werden demnach Adsorptionsmittel und das zu behandelnde Wasser im Gegenstrom gefahren, d.h. das am meisten verschmutzte Wasser kommt in Kontakt mit dem am meisten verschmutzten Adsorptionsmittel und das sauberere Wasser mit dem weniger beladenen Adsorptionsmittel. Bei den bisher üblichen Rutschbett-Verfahren mußte jeweils der verschmutzte Teil des Adsorptionsmittels nach kurzen Abständen erneuert werden.

Ein weiteres Verfahren besteht darin im gesamten Bereich des Adsorptionsmittels Mikroorganismen anzusiedeln. Das Adsorptionsmittel dient hierbei nur noch als Träger für die Mikroorganismen wodurch im allgemeinen keine Adsorption sondern nur noch ein biologischer Abbau stattfindet. Aus diesem Grund werden diesen biologischen Reinigungsstufen meist getrennte Adsorptionsstufen nachgeschaltet, bei denen dann das Adsorptionsmittel bei Bedarf komplett erneuert wurde.

Das Verfahren ist demnach dadurch gekennzeichnet, daß man im Gegenstrom belastetes Wasser durch einen Rutschbett-Adsorber leitet, welcher ein Adsorptionsmaterial enthält, das vor allem im unteren Bereich von einem oder mehreren Mikroorganismen besiedelt ist.

Durch die erfindungsgemäße Maßnahme, bei der Mikroorganismen auf einem Teil des Adsorptionsmittels angesiedelt sind, ist es möglich, den Großteil der organischen bzw. der halogenierten Kohlenwasserstoffe, die das Wasser belasten, biologisch abzubauen, was die Standzeit des Adsorptionsmittels erheblich verlängert.

Der Begriff belastetes Wasser umfaßt im Rahmen dieser Erfindung verunreinigte Grund- und Abwässer verschiedenster Herkunft z. B. Grundwasser, Oberflächenwasser, Deponiesickerwasser, häusliches Abwasser, konzentriertes Abwasser, Prozeßabwasser, Industrieabwasser sowie Gemische dieser Wässer.

Bei den das Wasser belastenden organischen, insbesondere halogenierten Verbindungen handelt es sich bevorzugt um halogenierte Kohlenwasserstoffe. Diese halogenierten Kohlenwasserstoffe können sowohl zur Klasse der aliphatischen wie auch der aromatischen Kohlenwasserstoffe gehören. Vorzugsweise enthalten die Kohlenwasserstoffe bis zu 9 C-Atome. Die Kohlenwasserstoffe sind, auch mehrfach, mit Halogenatomen substituiert, wobei Chlor bevorzugt ist. Nachfolgende Liste von halogenierten Kohlenwasserstoffen dient der Illustration ohne die möglichen Kohlenwasserstoffe hierauf beschränken zu wollen: Tetrachlorkohlenstoff, Chloroform, 1,1,2,2-Tetrachlorethan, 1,1,1-Trichlorethan, 1,2,3-Trichlorpropan, Tetrachlorethen, Trichlorethen, cis bzw. trans 1,2-Dichlorethen, 1,1-Dichlorethen, cis 1,3-Dichlorpropen, 1,2-Dichlorbenzol, 1,3-Dichlorbenzol, 1,4-Dichlorbenzol, 3-Chlortoluol und Brombenzol, insbesondere 1,2-Dichlorethan und Dichlormethan.

Die Konzentrationen der biologisch abbaubaren Verbindungen, gemessen in TOC (total organic carbon) beträgt dabei vorzugsweise 10 μg/l bis 10 g/l Wasser und die Konzentration an biologisch nicht abbaubaren Stoffen 1 μg/l bis 10 g/l Wasser.

Der Abbau durch Mikroorganismen kann dabei bei weniger stark belastetem Wasser aerob und bei stärker belasteten Wässern anaerob erfolgen. Besonders bevorzugt liegen die Konzentration der biologisch abbaubaren halogenierten Verbindungen, gemessen in TOC, bei anaerobem Abbau im Bereich von 100 μg/l bis 1 g/l Wasser und bei aeroben Abbau bei 100 μg/l bis 100 mg/l Wasser.

Die möglichen Adsorptionsmaterialien zeichnen sich durch eine große Oberfläche (0,1-1000 m$^2$/g) und durch Korngrössen von 0,2-50 mm, bevorzugt 0,5-5 mm, aus. Ein bevorzugtes Adsorptionsmaterial ist dabei Aktivkohle.

Es ist möglich, einen beliebigen anaeroben Adsorber vor einen aerob betriebenen Rutschbett-Adsorber zu schalten.

Während des Betriebes wird vorzugsweise der am unteren Ende des Rutschbett-Adsorbers entstehende Bioschlamm zusammen mit beladener Aktivkohle entnommen (z.B. 1/4 des Kohlegesamtvolumens) und von oben durch neue Aktivkohle ersetzt.

Durch den Abbau der biologisch abbaubaren Verbindungen am Einlaß des Rutschbett-Adsorbers entsteht ein Konzentrationsgefälle an diesen biologisch abbaubaren Verbindungen. Günstige Bedingungen ergeben sich, je nach Konzentration an abbaubaren Verbindungen, wenn die Belastung der Anlage so gewählt wird, daß der Bewuchs des Rutschbett-Adsorbers mit Mikroorganismen auf die untere Hälfte, vorzugsweise das untere Drittel des Reaktores beschränkt bleibt.

Die erfindungsgemäß einsetzbaren Mikroorganismen lassen sich auf vielfältige Art und Weise gewinnen. Es kann sich bei den Mikroorganismen auch um Mischpopulationen handeln. Brauchbare Mikroorganismen lassen sich aus Klärschlamm oder kontaminierten Böden isolieren, oder aber die Mikroorganismen werden bevorzugt als Reinkultur eingesetzt. Genauere Hinweise zur Isolierung und Kultivierung von Mikroorganismen sind dem Artikel von A.M. Cook et al in Experientia 39, S. 1191 (1983) zu entnehmen, der hiermit Teil der Beschreibung ist. Besonders geeignete Mikroorganismen zum Abbau halogenierter aliphatischer Verbindungen sind *Xanthobacter autotrophicus* GJ 10 (D.B. Janssen et al, Applied and Environmental Microbiology, 49, S. 673 (1985)) und Stamm DE2 (G. Stucki et al, Experientia 39 S. 1271 (1983)).

Bedingt durch den Nähr- und eventuellen Sauerstoffbedarf der Mikroorganismen kann es notwendig sein dem Wasser vor dem Durchgang durch den Reaktor die benötigten Nährstoffe z.B. in Form von anorganischen Salzen zuzusetzen, auch kann man gegebenenfalls die Sauerstoffkonzentration des Wassers erhöhen z.B. durch Zudosieren von Nitrat oder $H_2O_2$. Bevorzugt für eine Zugabe von "Sauerstoff" ist eine Lösung von $H_2O_2$ in Wasser, die je nach Durchsatzmenge Wasser und den Dosiereinrichtungen in einer Konzentration von 0,5-35 % zudosiert wird.

Weiterhin kann es bei stark belastetem oder schwach gepuffertem Wasser zu einer Übersäuerung des Wassers am Ausgang des Reaktors kommen, da der Abbau der halogenierten Verbindungen zu einer Erhöhung der Halogenid-Konzentration führt. In einem solchen Fall ist es günstig, bevorzugt vor dem Rutschbett-Adsorber, dem Wasser eine Base z.B. $NaHCO_3$ zuzugeben oder einen über einen pH-Controller gepufferten Teilstrom zurückzuführen.

Um unerwünschte Bestandteile zurückzuhalten, können vor den Rutschbett-Adsorber weitere Reinigungsschritte wie z.B. Feststoffabscheider geschaltet werden.

Man kann einen Teil des Abwassers in den Adsorber zurückführen. Um den pH-Wert zu kontrollieren, kann man Basen zu diesem rückgeführten Teilstrom zugeben.

Das Verfahren kann in einem Temperaturbereich von z.B. 5-60°C, vorzugsweise 7-38°C, durchgeführt werden.

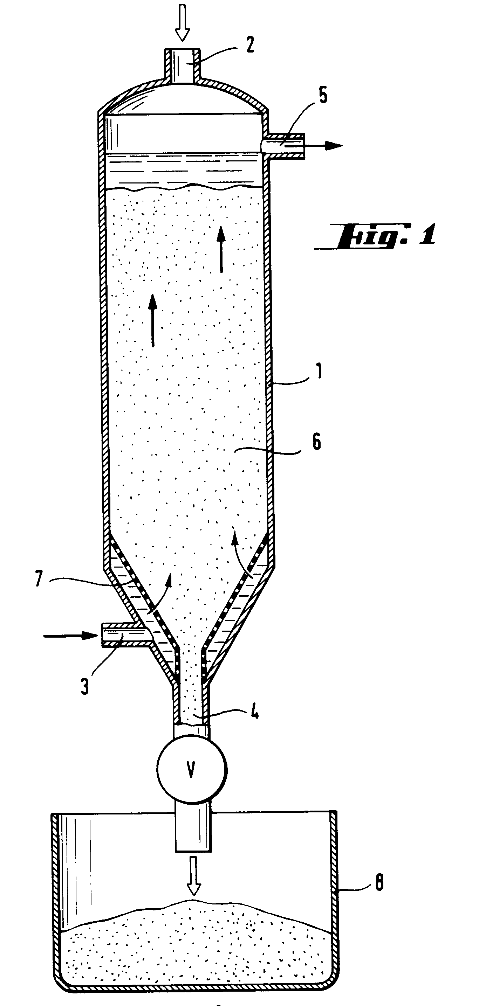

Der zur Durchführung des Verfahren verwendete Rutschbett-Adsorber (siehe Figur 1) enthält üblicherweise :

a) einen zur Aufnahme des Adsorptionsmaterials hergerichteten Behälter (1),

b) eine Zuführung (2) für das Adsorptionsmaterial im oberen Bereich des Behälters,

c) eine Zuführung (3) für belastetes Wasser vor allem im unteren Bereich des Behälters,

d) einen Auslaß (4) für das verbrauchte Adsorptionsmaterial am unteren Ende des Behälters,

e) einen Auslaß (5) für das gereinigte Wasser im oberen Bereich des Behälters,

f) ein Adsorptionsmaterial (6) im Behälter, das vor allem im unteren Bereich mit Mikroorganismen besiedelt ist und gegebenenfalls

g) ein Trenn-Sieb (7) das das Adsorptionsmaterial vom Wasser trennt.

Zur Messung der Reinigungsleistung kann am Auslaß (5) für das gereinigte Wasser eine geeignete Meßapparatur, wie etwa zur Bestimmung des TOC Gehaltes, angebracht sein.

Das verbrauchte Adsorptionsmaterial wird in einem Behälter (8) gesammelt und regeneriert oder entsorgt.

Bevorzugt sind Rutschbett-Adsorber deren unterer Teil in einem spitzen Konus mündet und einem Durchmesser zu Höhen-Verhältnis von 1:2 bis 1:10, wobei der Bereich von 1:3 bis 1:6 besonders bevorzugt ist.

Dem belasteten Wasser können vor dem Einleiten in den Rutschbett-Adsorber über eine Vorrichtung Nährstoffe und Sauerstoff enthaltende Substanzen zugemischt werden.

Die folgenden Beispiele veranschaulichen die Erfindung ohne sie darauf zu limitieren.

Beispiel 1: Zur Verkürzung der Beladungszeit werden 80,4 g Aktivkohle F400 (Chemviron) mit 750 g 1,2-Dichlorethan (DCE) in 500 ml Wasser während 4 Stunden gerührt, so daß sich eine Beladung von durchschnittlich 10 mg DCE pro Gramm Aktivkohle einstellt. Die beladene Aktivkohle wird mit einem DCE abbauenden Mikroorganismus (Xanthobacter autotrophicus) angeimpft und in einen Rutschbett-Adsorber aus Glas (2 cm Durchmesser, 8 cm Konuslänge) bis zu einer Höhe von 28 cm gefüllt. Durch den Rutschbett-Adsorber werden 3,5 bis 4 Liter Wasser pro Tag geleitet, das

5 bis 6,5 mg/l DCE,

0,87 mg/l Ammoniumphosphat und

0,5 ml/l einer Vitaminlösung

enthält (s. Tab. 1, Spalte 3).

Während des Versuches zeigt sich im unteren Bereich der Säule eine Braunfärbung durch das Hochwachsen der Mikroorganismen während im oberen Bereich kein Bewuchs der Aktivkohle festzustellen ist.

Beispiel 2: Wie Beispiel 1, nur ohne Animpfen der Aktivkohle mit Mikroorganismen (s. Tab. 1, Spalte 2).

Tabelle 1 :

| Tag | ohne Mikroorganismen (Ablaufkonz. in mg/ml DCE) | mit Mikroorganismen (Ablaufkonz. in mg/ml DCE) |
|---|---|---|
| 1 | 4,3 | 5,0 |
| 6 | 6,4 | 5,8 |
| 16 | 5,1 | 5,1 |
| 48 | 6,0 | 0,2 |
| 57 | 5,2 | 0,3 |
| 58 | 0,1 | - |
| 61 | 1,3 | - |
| 62 | 2,6 | - |
| 63 | 3,7 | - |
| 64 | 3,8 | - |
| 65 | 0,04 | 0,2 |
| 68 | - | 0,2 |
| 76 | - | 0,2 |
| 83 | - | 0,2 |
| 90 | - | 0,3 |
| 97 | - | 0,2 |

Kohlewechsel bei Absorber ohne Mikroorganismen

Beispiel 3: Grundwasser wird aus einem Brunnen mittels Tauchpumpe in einen 5 m³-Rührkessel gepumpt und mit einer Nährsalzlösung versehen (Konzentration: 1-3 mg/l Stickstoff (N) in Form von Ammonium-Ionen und 1-3 mg/l Phosphor in Form von Phosphat-Ionen).

Das Grundwasser wird in einem Zweischichtenfilter von den ungelösten Feststoffen befreit und gelangt dann über eine Pumpe in einen Rutschbettadsorber.

Dem Grundwasser wird vor dem Einlauf in den Rutschbettadsorber 35-%iges $H_2O_2$ zudosiert (Sauerstoffquelle). Da das Grundwasser selbst keine organischen Verunreinigungen aufweist, wird in den Zulauf eine Mischung aus alkylierten und chlorierten Aromaten dosiert (5-15 mg/l TOC).

Der Rutschbettadsorber ist wie folgt charakterisiert:

Höhe: 3,1 m
Innendurchmesser: 0,5 m
Adsorbens: Kornaktivkohle (Fa. CHEMVIRON, Typ F400, 130 kg)
Hydraulische Leistung: 800 l/h
Betriebsdauer: 36 Wochen

Die folgenden Resultate werden bei Eingangskonzentrationen zwischen 0,1 und 15 mg/l pro Einzelsubstanz und mittlere Verweilzeiten (bezogen auf das Volumen der Aktivkohle) von höchstens 20 Minuten erzielt.

Chlorbenzol < 5 μg/l
1,2-Dichlorbenzol < 5 μg/l
1,3-Dichlorbenzol < 5 μg/l
1,4-Dichlorbenzol < 5 μg/l
1,2,4-Trichlorbenzol < 5 μg/l

Von der Chemikalienmischung wurden Adsorptionsisothermen aufgenommen. Daraus geht hervor, dass bei einer Ablaufkonzentration von 0,4 mg/l die Beladung z.B. in g TOC pro g Aktivkohle der Aktivkohle (A-Kohle) 0,06 % beträgt. Im vorliegenden Fall liegen die Ablaufkonzentrationen aber mit < 0,005 mg/l weit tiefer. Das bedeutet, dass die Beladung von 0,06 % sicherlich den günstigsten Fall darstellt. Bei einer A-Kohlepackung von 130 kg könnten also nur rund 0,078 kg adsorbiert werden, dann müsste die Packung durch eine neue ersetzt werden. Tatsächlich werden mit einer einzigen Packung 53,2 kg Chemikalienmix eliminiert. Rein rechnerisch stellt das eine Beladung von 40,9 % dar und ist somit ein vielfaches der aus den Adsorptionsisothermen abgeschätzten Reinigungsleistung.

Die Differenz ist offenbar auf den aktiven biologischen Abbau auf der A-Kohle zurückzuführen. Bei diesem Abbau werden die Substanzen zu Wasser, Kohlensäure und Salzsäure mineralisiert. Der Abbau kann dadurch belegt werden, dass die zwischen Zu- und Ablauf bestehende Differenz in der Chloridkonzentration genau dem errechneten Chloranteil der Chemikalienmischung entspricht. Bei einem Unterbrechen der Sauerstoffzufuhr bleiben die chlorierten Chemikalien zu über 90 % unabgebaut.

Beispiel 4: Kontaminiertes Grundwasser wird aus einem Brunnen mittels Tauchpumpe in den Obeneinlauf

4

eines Zweischichtenfilters gepumpt und beim Durchströmen von den ungelösten Feststoffen befreit.

In den Zulauf werden Hilfschemikalien (Stickstoff, Phosphor, Sauerstoff dosiert. Die Schichten bestehen aus grobkörnigem Bimsstein oben und aus feinkörnigem Quarzsand unten.

Technische Daten Zweischichtenfilter

| Höhe: | 3,6 m |
|---|---|
| Innendurchmesser: | 0,7 m |
| Packung Schicht oben: | 155 kg Bimsstein, |
| Packung Schicht unten: | 360 kg Quarzsand |

Im Normalbetrieb gelangt das geklärte Wasser im freien Überlauf in den Unteneinlauf eines ersten Rutschbettabsorbers. Dieser ist mit granulierter Kornaktivkohle gefüllt Die im Grundwasser gelösten Schadstoffe werden hier durch biologischen Abbau und Adsorption eliminiert.

Das gereinigte Wasser gelangt im freien Überlauf in einen zweiten, identischen Rutschbettadsorber, welcher 0,5 m tiefer steht. Dieser hat primär die Funktion eines Sicherheitsfilters: Sollten trotz regelmässiger Probenahme und Analyse des ersten Adsorbers einmal unerwartet Schadstoffe durchbrechen, fliesst dieses Wasser nicht in den Vorfluter, sondern durch diesen zweiten Kohleadsorber. Spätestens jetzt muss ein Teil der A-Kohle im ersten Rutschbettadsorber durch frische A-Kohle ersetzt werden. Knapp unter dem Einlauf in die Kolonne befindet sich ein Schieber, welcher das bequeme Wechseln von erschöpfter A-Kohle erlaubt. Die gleiche Menge an frischer Kohle muss dann wieder oben in den Rutschbettadsorber eingetragen werden. Zusätzlich kann bei einem Kohlewechsels des ersten Rutschbetts durch die entsprechenden Ventilstellungen der Ablauf Zweischichtenfilter direkt durch das zweite Rutschbett geleitet werden, so dass keine Unterbrechung erforderlich ist. Liegt der Ablauf des zweiten Rutschbettadsorbers über den festgelegten Konzentrationen, so muss auch hier die Kohle ausgetauscht werden.

Technische Daten der Rutschbettadsorber I

| Höhe: | 3,6 bzw. 3,1 m |
|---|---|
| Innendurchmesser: | 0,5 m |
| Packung: | Kornaktivkohle (Fa. CHEMVIRON, Typ F400, 130 kg) |

Der Ablauf des zweiten Rutschbettadsorbers fliesst in einen Tank, welcher einen Überlauf in den Regenwasser-Kanal besitzt. Der Inhalt des Tanks dient als Probenahmestelle und als Vorlage für Rückspülwasser.

**Patentansprüche**

1. Verfahren zur Wasserreinigung dadurch gekennzeichnet, daß man belastetes Wasser im Gegenstrom durch einen Rutschbett-Adsorber leitet, welcher ein Adsorptionsmaterial enthält, das von einem oder mehreren Mikroorganismen besiedelt ist.

2. Verfahren nach Anspruch 1, dadurch gekennzeichnet, dass das Adsorptionsmaterial im unteren Bereich von einem oder mehreren Mikoorganismen besiedelt ist.

3. Verfahren nach Anspruch 1 oder 2, dadurch gekennzeichnet, daß das belastete Wasser biologisch abbaubare Verbindungen in einer Konzentration, gemessen in TOC, von 10 $\mu$g/l bis 10 g/l Wasser und biologisch nicht abbaubare Stoffe in einer Konzentration von 1 $\mu$g/l bis 10 g/l Wasser enthält.

4. Verfahren nach einem der Ansprüche 1 bis 3, dadurch gekennzeichnet, daß die Konzentration der biologisch abbaubaren Verbindungen, gemessen in TOC, bei anaeroben Abbau 100 $\mu$g/l bis 1 g/l Wasser und bei aeroben Abbau 100 $\mu$g/l bis 100 mg/l Wasser beträgt.

5. Verfahren nach einem der Ansprüche 1 bis 4, dadurch gekennzeichnet, daß die biologisch abbaubaren Verbindungen halogenierte Verbindungen sind.

6. Verfahren nach Anspruch 5, dadurch gekennzeichnet, daß die halogenierten Verbindungen halogenierte Kohlenwasserstoffe sind.

7. Verfahren nach Anspruch 6, dadurch gekennzeichnet, daß die halogenierten Kohlenwasserstoffe bis zu maximal 9 C-Atome enthalten.

8. Verfahren nach einem der Ansprüche 5 bis 7, dadurch gekennzeichnet, daß die halogenierten Kohlenwasserstoffe chlorierte und/oder bromierte Kohlenwasserstoffe sind.

9. Verfahren nach einem der Ansprüche 5 bis 8, dadurch gekennzeichnet, daß der halogenierte Kohlenwasserstoff 1,2-Dichlorethan ist.

10. Verfahren nach einem der Ansprüche 1 bis 9, dadurch gekennzeichnet, daß das Adsorptionsmaterial Aktivkohle ist.

11. Verfahren nach einem der Ansprüche 1 bis 10, dadurch gekennzeichnet, dass sich das Adsorptionsmaterial durch eine Oberfläche von 0,1-1000 $m^2/g$ und durch Korngrössen von 0,2-50 mm auszeichnet.

12. Verfahren nach einem der Ansprüche 1 bis 11, dadurch gekennzeichnet, dass ein beliebiger anaerober Adsorber vor einen aeroben Rutschbett-Adsorber geschaltet ist.

13. Verfahren nach einem der Ansprüche 1 bis 12, dadurch gekennzeichnet, daß die beladene Aktivkohle am unteren Ende des Rutschbett-Adsorbers zusammen mit dem entstehenden Bioschlamm entnommen und von oben durch neue Aktivkohle ersetzt wird.

14. Verfahren nach einem der Ansprüche 1 bis 13, dadurch gekennzeichnet, daß durch die Reaktionsführung der Bewuchs des Rutschbett-Adsorbers mit Mikroorganismen auf das untere Drittel des Reaktores beschränkt bleibt.

15. Verfahren nach einem der Ansprüche 1 bis 14, dadurch gekennzeichnet, daß die eingesetzten Mikroorganismen aus einer Reinkultur, aus Klärschlamm oder aus kontaminierten Böden erhalten werden.

16. Verfahren nach Anspruch 15, dadurch gekennzeichnet, daß die eingesetzten Mikroorganismen aus einer Reinkultur erhalten werden.

17. Verfahren nach einem der Ansprüche 1 bis 16, dadurch gekennzeichnet, daß dem Wasser vor dem Durchgang durch den Rutschbett-Adsorber Nährstoffe und Sauerstoff oder eine Sauerstoff enthaltende Substanz zugesetzt wird, sowie gegebenenfalls der pH-Wert angepaßt wird.

18. Verfahren nach Anspruch 17, dadurch gekennzeichnet, daß man dem Wasser Wasserstoffperoxid zugibt.

19. Verfahren nach Anspruch 17, dadurch gekennzeichnet, daß man dem Wasser Nitrat zugibt.

20. Verfahren nach einem der Ansprüche 1 bis 19, dadurch gekennzeichnet, daß man dem Wasser eine Base zugibt.

21. Verfahren nach Anspruch 1, dadurch gekennzeichnet, daß man mit 0,3-30 mg/l 1,2-Dichlorethan belastetes Wasser durch einen mit Aktivkohle gefüllten Rutschbett-Adsorber leitet, wobei die Aktivkohle mit aus einer Reinkultur gewonnenen Mikroorganismen angeimpft wird und man Nährstoffe und $H_2O_2$ dem Wasser vor dem Durchgang durch den Rutschbett-Adsorber zusetzt.

22. Rutschbett-Adsorber zur Reinigung von belastetem Wasser, enthaltend
a) einen zur Aufnahme des Adsorptionsmaterials hergerichteten Behälter (1),
b) eine Zuführung (2) für das Adsorptionsmaterial im oberen Bereich des Behälters,
c) eine Zuführung (3) für belastetes Wasser im unteren Bereich des Behälters,
d) einen Auslaß (4) für das verbrauchte Adsorptionsmaterial am unteren Ende des Behälters,
e) einen Auslaß (5) für das gereinigte Wasser im oberen Bereich des Behälters,
f) ein Adsorptionsmaterial (6) im Behälter, das im unteren Bereich mit Mikroorganismen besiedelt ist und gegebenenfalls
g) ein Trenn-Sieb (7), welches das Adsorptionsmaterial vom Wasser trennt.

23. Rutschbett-Adsorber nach Anspruch 22, dadurch gekennzeichnet, daß der Behälter ein Durchmesser zu Höhen-Verhältnis von 1:2 bis 1:10 besitzt und nach unten konisch zuläuft.

24. Rutschbett-Adsorber nach Anspruch 22 oder 23, dadurch gekennzeichnet, daß das Adsorptionsmittel Aktivkohle ist.

25. Rutschbett-Adsorber nach einem der Ansprüche 22 bis 24, dadurch gekennzeichnet, daß die eingesetzten Mikroorganismen aus einer Reinkultur, aus Klärschlamm oder aus kontaminierten Böden erhalten werden.

26. Rutschbett-Adsorber nach einem der Ansprüche 22 bis 25, dadurch gekennzeichnet, daß er eine Vorrichtung zum Zumischen von Nährstoffen und Sauerstoff enthaltenden Substanzen in der Zuführung für das belastete Wasser enthält.

27. Rutschbett-Adsorber nach einem der Ansprüche 22 bis 26, dadurch gekennzeichnet, daß er am Auslaß für das gereinigte Wasser eine Meßapparatur zur Bestimmung der Innhaltsstoffe des gereinigten Wassers enthält.

Fig. 1

Europäisches
Patentamt

## EUROPÄISCHER RECHERCHENBERICHT

Nummer der Anmeldung

| | EINSCHLÄGIGE DOKUMENTE | | |
|---|---|---|---|
| | | | EP 93810163.1 |
| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
| Y | <u>EP - A - 0 430 886</u><br>(CIBA-GEIGY)<br>    * Ansprüche * | 1,3-<br>11,13,<br>15-22,<br>24-26 | C 02 F 3/10<br>C 02 F 3/06 |
| Y | <u>US - A - 4 202 770</u><br>(GAPPA et al.)<br>    * Ansprüche; Fig. 1 * | 1,3-<br>11,13,<br>15-22,<br>24-26 | |
| X | <u>DE - A - 3 222 969</u><br>(MERCK PATENT GMBH)<br>    * Seite 3, Zeilen 9-21;<br>    Beispiel * | 1,13,<br>22,24 | |
| A | <u>DE - C - 2 708 340</u><br>(REDERIAKTIEBOLAGET<br>NORDSTJERNAN)<br>    * Anspruch 1; Fig. 1 * | 1,22 | |
| A | <u>DD - A - 256 319</u><br>(VEB PROJEKTIERUNG<br>WASSERWIRTSCHAFT)<br>    * Beispiel * | 1,3,10 | RECHERCHIERTE SACHGEBIETE (Int. Cl.⁵)<br><br>C 02 F 3/00<br>C 02 F 1/00 |
| A | <u>DE - A - 3 816 679</u><br>(IBL INTERNATIONAL<br>BIOTECHNOLOGY)<br>    * Ansprüche; Fig. 1 * | 1,5,6,<br>10,15,<br>17,20 | |

Der vorliegende Recherchenbericht wurde für alle Patentansprüche erstellt.

| Recherchenort<br>WIEN | Abschlußdatum der Recherche<br>19-05-1993 | Prüfer<br>KÖRBER |
|---|---|---|